# EUROPEAN PATENT APPLICATION

(11) **EP 4 216 059 A1**
(43) Date of publication of application: **26.07.2023**
(21) Application number: 21881861.5
(22) Date of filing: 08.10.2021
(51) Int. Cl.: G06F 9/451

(54) **ANNOTATION DISPLAY METHOD AND ELECTRONIC DEVICE**

(30) Priority: 22.10.2020 CN 202011144234; 28.10.2020 CN 202011174621
(71) Applicant: Huawei Technologies Co., Ltd., Shenzhen, Guangdong 518129 (CN)
(72) Inventor: FAN, Mingchao, Shenzhen, Guangdong 518129 (CN)
(74) Representative: Huawei European IPR
(86) International application number: PCT/CN2021/122579
(87) International publication number: WO 2022/083443

(57) **Abstract**

This application discloses an annotation display method and an electronic device, and relates to the field of electronic information technologies, to resolve a problem of misalignment between an annotation and corresponding content that exists when content on a display interface is annotated. In this application, the electronic device binds an annotation that is entered by a user by using an annotation layer and that is for interface content to the corresponding interface content, stores the binding relationship, and renders, based on the stored binding relationship, the annotation at a position corresponding to the interface content. For example, a corresponding annotation is displayed at a corresponding position on the display interface, or a corresponding annotation is displayed at a corresponding position on the annotation layer. This solution may be used to avoid the problem of misalignment between an annotation and corresponding content on the display interface caused by out-of-synchronization between the annotation entered by the user and a change of the display interface when there is an interface change such as a window change, a text size change, a picture size change, or content addition or deletion of the display interface.

## Description

This application claims priority to Chinese Patent Application No. 202011144234.5, filed with the China National Intellectual Property Administration on October 22, 2020 and entitled "ANNOTATION DISPLAY METHOD AND ELECTRONIC DEVICE", and priority to Chinese Patent Application No. 202011174621.3, filed with the China National Intellectual Property Administration on October 28, 2020 and entitled "ANNOTATION DISPLAY METHOD AND ELECTRONIC DEVICE", which are incorporated herein by reference in their entireties.

### TECHNICAL FIELD

Embodiments of this application relate to the field of electronic information technologies, and in particular, to an annotation display method and an electronic device.

### BACKGROUND

With development of touchscreen technologies, increasingly more electronic devices support a user in annotating content on a display interface, for example, support the user in annotating text content in a touch manner, that is, annotating the text content in a handwriting manner. For example, the electronic device may support the user in striking out, underlining, highlighting, selecting, and textually annotating any text content on an interface such as a memo interface or an office application interface in the touch manner.

An example in which text content on the memo interface is annotated in the handwriting manner is used. To associate an annotation with specific text content on the memo interface, in an implementation method, for the electronic device, a handwriting layer may be added on the memo interface, so that the user annotates the corresponding text content on the handwriting layer. However, if a memo window changes (for example, changes in a size and/or a shape), a memo text size changes, or text content or the like changes, the text content corresponding to the annotation on the handwriting layer is misaligned in the foregoing method.

### SUMMARY

This application provides an annotation display method and an electronic device, to resolve a problem of misalignment between an annotation and corresponding content caused by an interface change such as a window change, a text size change, a picture size change, or content addition or deletion of a display interface, when content on the display interface is annotated.

To achieve the foregoing objectives, the following technical solutions are used in embodiments of this application.

According to a first aspect, an annotation display method is provided. The method includes: An electronic device displays an annotation layer on a display interface in an overlay manner when receiving a first operation of a user; the electronic device receives a second operation performed by the user on the annotation layer, where the second operation is used to annotate content on the display interface; the electronic device identifies one or more targets corresponding to the second operation on the display interface, and determines an annotation style of the one or more targets, where the annotation style includes an annotation type; the electronic device stores the annotation style of the one or more targets corresponding to the second operation; and the electronic device displays, based on the stored annotation style, an annotation corresponding to the one or more targets on the display interface.

In the solution provided in the first aspect, the electronic device binds an annotation that is entered by the user by using the annotation layer and that is for interface content to the corresponding interface content, stores the binding relationship, and renders, based on the stored binding relationship, the annotation at a position corresponding to the interface content. For example, a corresponding annotation is displayed at a corresponding position on the display interface, or a corresponding annotation is displayed at a corresponding position on the annotation layer. This solution may be used to avoid a problem of misalignment between an annotation and corresponding content on the display interface caused by out-of-synchronization between the annotation entered by the user and a change of the display interface when there is a change such as a window change, a text size change, a picture size change, or a content change of the display interface.

In a possible implementation, the method further includes: In response to a received third operation of the user, the electronic device displays, based on the stored annotation style, the annotation corresponding to the one or more targets on the display interface. The third operation of the user includes one or more of the following: an operation of changing a window size of the display interface by the user, an operation of changing a window shape of the display interface by the user, an operation of changing content on the display interface by the user, and an operation of changing a size of content on the display interface by the user. In the solution provided in this application, based on a stored binding relationship between an annotation style and interface content, an annotation is rendered at a position corresponding to the interface content, to avoid a problem of misalignment between an annotation and corresponding content on the display interface caused by out-of-synchronization between the annotation entered by the user and a change of the display interface when there is a change such as a window change, a text size change, a picture size change, or a content change of the display interface.

In a possible implementation, that the electronic device displays, based on the stored annotation style, the annotation corresponding to the one or more targets on the display interface includes: The electronic device displays an updated display interface based on the stored annotation style, where the updated display interface includes the annotation corresponding to the one or more targets. In the solution provided in this application, the electronic device is supported in displaying a corresponding annotation at a corresponding position on the display interface based on a stored binding relationship between an annotation style and interface content.

In a possible implementation, that the electronic device displays, based on the stored annotation style, the annotation corresponding to the one or more targets on the display interface includes: The electronic device displays the annotation on the annotation layer based on the stored annotation style, where the annotation displayed on the annotation layer corresponds to the one or more targets on the display interface. In the solution provided in this application, the electronic device is supported in displaying a corresponding annotation at a corresponding position on the annotation layer based on a stored binding relationship between an annotation style and interface content.

In a possible implementation, the one or more targets corresponding to the second operation on the display interface include one or more words and/or one or more pictures. For example, in this application, the annotation entered by the user may be for some words on the display interface, or may be for some pictures on the display interface.

In a possible implementation, the annotation type includes any one of the following: a highlight line, an underline, strikeout, selection, a graphic mark, or a text annotation. In the solution provided in this application, the user may be supported in making any type of annotation for interface content, such as highlighting, underlining, striking out, selecting, graphically marking, or textually annotating.

In a possible implementation, that the electronic device identifies one or more targets corresponding to the second operation on the display interface includes: The electronic device obtains first coordinate information, where the first coordinate information is coordinate information of an operation track corresponding to the second operation in a preset coordinate system; the electronic device obtains second coordinate information, where the second coordinate information is coordinate information of all content on the display interface in the preset coordinate system; and the electronic device determines one or more targets corresponding to the second coordinate information that matches the first coordinate information. The electronic device determines, based on a matching status between the coordinate information corresponding to the second operation entered by the user and the coordinate information of the interface content on the display interface, the one or more targets corresponding to the second operation on the display interface. This achieves high accuracy and is easy to implement.

In a possible implementation, before the electronic device stores the annotation style of the one or more targets corresponding to the second operation, the method further includes: The electronic device modifies the annotation corresponding to the second operation. In this application, the electronic device may modify (or beautify) the annotation entered by the user, to obtain a more graceful annotation, and provide use experience of the user.

In a possible implementation, that the electronic device modifies the annotation corresponding to the second operation includes: The electronic device modifies a line shape entered by the user by using the second operation to a corresponding standard line shape; and/or the electronic device modifies a graphic entered by the user by using the second operation to a corresponding standard graphic; and/or the electronic device modifies a text annotation entered by the user by using the second operation to text in a standard font. For example, the electronic device may modify a line shape annotation entered by the user to a corresponding standard line shape, modify a graphic annotation entered by the user to a corresponding standard graphic, and modify a text annotation entered by the user to text in a standard font, to obtain a more graceful annotation, and provide use experience of the user

In a possible implementation, the annotation style further includes a line shape of the highlight line, the underline, the strikeout, the selection, or the graphic mark, or a line shape of a connection line between the text annotation and a corresponding target.

In a possible implementation, the annotation style further includes a relative position between the highlight line, the underline, the strikeout, the selection, the graphic mark, or the text annotation and a corresponding target.

In a possible implementation, the method further includes: The electronic device updates the annotation style in response to a received fourth operation of the user, where the fourth operation is an editing operation performed by the user on the annotation entered by using the second operation. In the solution provided in this application, the electronic device may update a binding relationship between an annotation style and interface content based on the editing operation performed by the user on the annotation. In this way, when any change occurs on the display interface, it can be ensured that the annotation and the corresponding content on the display interface are not misaligned.

In a possible implementation, the first operation includes an operation of selecting a virtual stylus type by the user or an operation of selecting an annotation pattern by the user, where the virtual stylus type includes a virtual pencil, a virtual fountain pen, a virtual ball-point pen, or a virtual marker; and the annotation pattern includes highlighting, underlining, striking out, selecting, graphically marking, or textually annotating.

In a possible implementation, the second operation includes a sliding operation performed by the user above, below, around, or on the one or more targets.

According to a second aspect, an electronic device is provided. The electronic device includes a detection unit, a display unit, a processing unit, and a storage unit. The detection unit is configured to detect a first operation and a second operation of a user. The first operation is used to trigger the display unit to display an annotation layer on a display interface in an overlay manner. The second operation is an operation performed by the user on the annotation layer, and the second operation is used to annotate content on the display interface. The processing unit is configured to identify one or more targets corresponding to the second operation on the display interface, and determine an annotation style of the one or more targets. The annotation style includes an annotation type. The storage unit is configured to store the annotation style of the one or more targets corresponding to the second operation. The display unit is further configured to display, based on the stored annotation style, an annotation corresponding to the one or more targets on the display interface.

In the solution provided in the second aspect, the electronic device binds an annotation that is entered by the user by using the annotation layer and that is for interface content to the corresponding interface content, stores the binding relationship, and renders, based on the stored binding relationship, the annotation at a position corresponding to the interface content. For example, a corresponding annotation is displayed at a corresponding position on the display interface, or a corresponding annotation is displayed at a corresponding position on the annotation layer. This solution may be used to avoid a problem of misalignment between an annotation and corresponding content on the display interface caused by out-of-synchronization between the annotation entered by the user and a change of the display interface when there is a change such as a window change, a text size change, a picture size change, or a content change of the display interface.

In a possible implementation, the detection unit is further configured to detect a third operation of the user. The display unit is further configured to: in response to the third operation detected by the detection unit, display, based on the stored annotation style, the annotation corresponding to the one or more targets on the display interface. The third operation of the user includes one or more of the following: an operation of changing a window size of the display interface by the user, an operation of changing a window shape of the display interface by the user, an operation of changing content on the display interface by the user, and an operation of changing a size of content on the display interface by the user. In the solution provided in this application, based on a stored binding relationship between an annotation style and interface content, an annotation is rendered at a position corresponding to the interface content, to avoid a problem of misalignment between an annotation and corresponding content on the display interface caused by out-of-synchronization between the annotation entered by the user and a change of the display interface when there is a change such as a window change, a text size change, a picture size change, or a content change of the display interface.

In a possible implementation, the display unit is specifically configured to display an updated display interface based on the stored annotation style, where the updated display interface includes the annotation corresponding to the one or more targets. In the solution provided in this application, the electronic device is supported in displaying a corresponding annotation at a corresponding position on the display interface based on a stored binding relationship between an annotation style and interface content.

In a possible implementation, the display unit is specifically configured to display the annotation on the annotation layer based on the stored annotation style, where the annotation displayed on the annotation layer corresponds to the one or more targets on the display interface. In the solution provided in this application, the electronic device is supported in displaying a corresponding annotation at a corresponding position on the annotation layer based on a stored binding relationship between an annotation style and interface content.

In a possible implementation, the one or more targets corresponding to the second operation on the display interface include one or more words and/or one or more pictures. For example, in this application, the annotation entered by the user may be for some words on the display interface, or may be for some pictures on the display interface.

In a possible implementation, the annotation type includes any one of the following: a highlight line, an underline, strikeout, selection, a graphic mark, or a text annotation. In the solution provided in this application, the user may be supported in making any type of annotation for interface content, such as highlighting, underlining, striking out, selecting, graphically marking, or textually annotating.

In a possible implementation, the processing unit is specifically configured to: obtain first coordinate information, where the first coordinate information is coordinate information of an operation track corresponding to the second operation in a preset coordinate system; obtain second coordinate information, where the second coordinate information is coordinate information of all content on the display interface in the preset coordinate system; and determine one or more targets corresponding to the second coordinate information that matches the first coordinate information. The electronic device determines, based on a matching status between the coordinate information corresponding to the second operation entered by the user and the coordinate information of the interface content on the display interface, the one or more targets corresponding to the second operation on the display interface. This achieves high accuracy and is easy to implement.

In a possible implementation, the processing unit is further configured to modify the annotation corresponding to the second operation. In this application, the electronic device may modify (or beautify) the annotation entered by the user, to obtain a more graceful annotation, and provide use experience of the user.

In a possible implementation, that the processing unit modifies the annotation corresponding to the second operation includes: The processing unit modifies a line shape entered by the user by using the second operation to a corresponding standard line shape; and/or the processing unit modifies a graphic entered by the user by using the second operation to a corresponding standard graphic; and/or the processing unit modifies a text annotation entered by the user by using the second operation to text in a standard font. For example, the electronic device may modify a line shape annotation entered by the user to a corresponding standard line shape, modify a graphic annotation entered by the user to a corresponding standard graphic, and modify a text annotation entered by the user to text in a standard font, to obtain a more graceful annotation, and provide use experience of the user

In a possible implementation, the annotation style further includes a line shape of the highlight line, the underline, the strikeout, the selection, or the graphic mark, or a line shape of a connection line between the text annotation and a corresponding target.

In a possible implementation, the annotation style further includes a relative position between the highlight line, the underline, the strikeout, the selection, the graphic mark, or the text annotation and a corresponding target.

In a possible implementation, the detection unit is further configured to detect a fourth operation of the user, where the fourth operation is an editing operation performed by the user on the annotation entered by using the second operation. The processing unit is further configured to update the annotation style when the detection unit detects the fourth operation. In the solution provided in this application, the electronic device may update a binding relationship between an annotation style and interface content based on the editing operation performed by the user on the annotation. In this way, when any change occurs on the display interface, it can be ensured that the annotation and the corresponding content on the display interface are not misaligned.

In a possible implementation, the first operation includes an operation of selecting a virtual stylus type by the user or an operation of selecting an annotation pattern by the user, where the virtual stylus type includes a virtual pencil, a virtual fountain pen, a virtual ball-point pen, or a virtual marker; and the annotation pattern includes highlighting, underlining, striking out, selecting, graphically marking, or textually annotating.

In a possible implementation, the second operation includes a sliding operation performed by the user above, below, around, or on the one or more targets.

According to a third aspect, an electronic device is provided. The electronic device includes one or more sensors, a display, a memory, and a processor. The memory includes program instruction code. When the processor executes the program instruction code, the electronic device performs the method according to any one of the possible implementations of the first aspect.

According to a fourth aspect, a computer-readable storage medium is provided. The computer-readable storage medium stores computer-executable instructions, and when the computer-executable instructions are executed by a processor, the method according to any one of the possible implementations of the first aspect is implemented.

According to a fifth aspect, a chip system is provided. The chip system includes a processor and a memory. The memory stores instructions, and when the instructions are executed by the processor, the method according to any one of the possible implementations of the first aspect is implemented. The chip system may include a chip, or may include a chip and another discrete component.

According to a sixth aspect, a computer program product is provided. When the computer program product is run on a computer, the method according to any one of the possible implementations of the first aspect is implemented.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3(a), FIG. 3(b), FIG. 3(c), and FIG. 3(d) are example diagrams of a conventional handwritten annotation for rendering text content;
FIG. 4 is an example diagram of several handwritten annotations according to an embodiment of this application;
FIG. 5 is a flowchart of an annotation display method according to an embodiment of this application;
FIG. 6(a) and FIG. 6(b) are example diagrams of two interfaces used to perform a first operation according to an embodiment of this application;
FIG. 7 is a flowchart of another annotation display method according to an embodiment of this application;
FIG. 8 is an example diagram of a preset coordinate system of an electronic device according to an embodiment of this application;
FIG. 9 is a flowchart of displaying, by an electronic device, an annotation corresponding to one or more words on a display interface according to an embodiment of this application;
FIG. 10(a), FIG. 10(b), and FIG. 10(c) are three example diagrams of rendering a handwritten annotation by an electronic device according to an embodiment of this application;
FIG. 11 is a flowchart of a third annotation display method according to an embodiment of this application;
FIG. 12(a) and FIG. 12(b) are comparison diagrams of an unmodified handwritten annotation and a modified handwritten annotation of an electronic device according to an embodiment of this application; and
FIG. 13 is a structural block diagram of an electronic device according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more

Embodiments of this application provide an annotation display method, and the method is applied to a process of displaying an annotation for content on a display interface. For example, the method may be used in a process of displaying a handwritten annotation for text content on a display interface. The handwritten annotation in embodiments of this application may include but is not limited to an annotation entered by a user on a touchscreen of an electronic device by using a finger, an annotation entered by the user on the touchscreen of the electronic device by using a stylus, or the like.

In embodiments of this application, an electronic device configured to display a display interface and an annotation may be an electronic device having a touchscreen, for example, a smartphone, a netbook, a tablet computer, a smartwatch, a smart band, a watch phone, a smart camera, a palmtop computer, a personal computer (personal computer, PC), a personal digital assistant (personal digital assistant, PDA), a portable multimedia player (portable multimedia player, PMP), an (augmented reality, AR)/virtual reality (virtual reality, VR) device, a television, a projection device, or a somatosensory game console in a human-computer interaction scenario. Alternatively, the electronic device may be an electronic device that is of another type or structure and that has a touchscreen. This is not limited in this application.

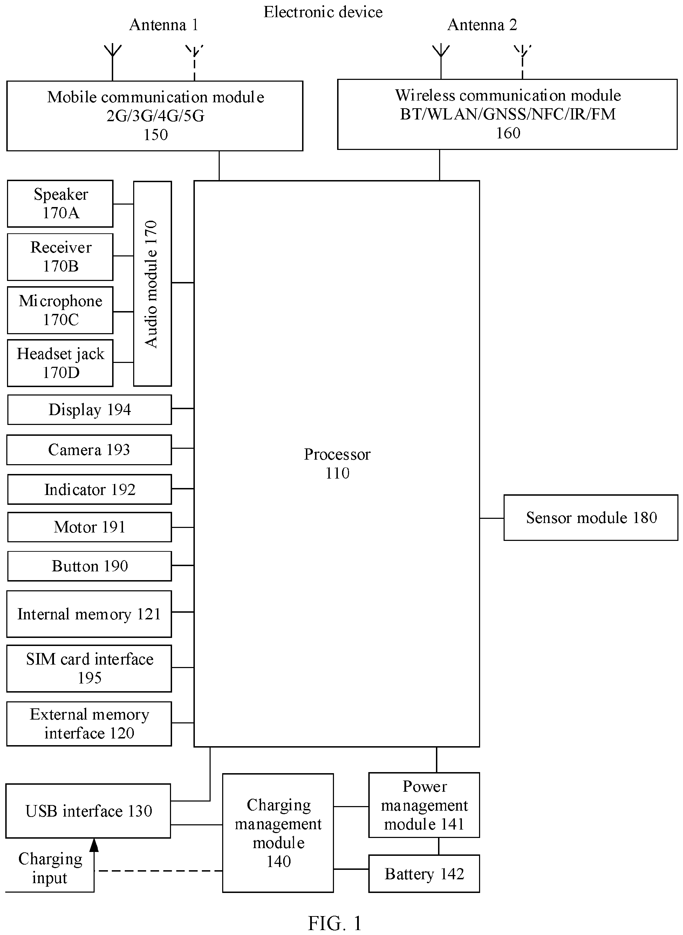

With reference to FIG. 1, FIG. 1 shows a schematic diagram of a hardware structure of an electronic device according to an embodiment of this application by using a smartphone as an example. As shown in FIG. 1, the electronic device may include a processor 110, a memory (including an external memory interface 120 and an internal memory 121), a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of the present invention does not constitute a specific limitation on the electronic device. In some other embodiments of this application, the electronic device may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In this embodiment of this application, the processor 110 may be configured to identify one or more targets that are corresponding to a received first operation and second operation of a user and that are on a display interface, and determine an annotation style of the one or more targets. In some embodiments, the processor 110 may be further configured to support, based on a received third operation of the user, the electronic device in re-rendering the display interface based on the annotation style stored in the electronic device.

In some embodiments, the processor 110 may include one or more interfaces.

The charging management module 140 is configured to receive charging input from a charger.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera assembly 193, the wireless communication module 160, and the like.

A wireless communication function of the electronic device may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal.

The mobile communication module 150 may provide a wireless communication solution that is applied to the electronic device and that includes 2G/3G/4G/5G or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing.

The wireless communication module 160 may provide a wireless communication solution that is applied to the electronic device and that includes a wireless local area network (wireless local area network, WLAN) (for example, a Wi-Fi network), Bluetooth BT, a global navigation satellite system (global navigation satellite system, GNSS), frequency modulation (frequency modulation, FM), near field communication (near field communication, NFC), infrared (infrared, IR), or the like.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology.

The electronic device implements a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 194, where N is a positive integer greater than 1.

In this embodiment of this application, the GPU may be configured to render the display interface. Correspondingly, the display 194 may be configured to display the display interface rendered by the GPU. Further, the GPU may be further configured to: based on the first operation and the second operation of the user, overlay the display interface with an annotation layer, and render the annotation layer. Correspondingly, the display 194 may be further configured to display, on the display interface in an overlay manner, the annotation layer rendered by the GPU. In some embodiments, the GPU may be further configured to: when receiving the third operation of the user, re-render the display interface based on the annotation style stored in the electronic device. Correspondingly, the display 194 may be further configured to redisplay the display interface re-rendered by the GPU.

The electronic device may implement a photographing function by using the ISP, the camera assembly 193, the video codec, the GPU, the display 194, the application processor, and the like.

The external memory interface 120 may be configured to connect to an external storage card, for example, a micro SD card, to extend a storage capability of the electronic device. The external storage card communicates with the processor 110 by using the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) created when the electronic device is used, and the like. In addition, the internal memory 121 may include a high-speed random access memory, or may include a non-volatile memory such as at least one disk storage device, a flash memory, or a universal flash storage (universal flash storage, UFS). The processor 110 runs the instructions stored in the internal memory 121 and/or the instructions stored in the memory disposed in the processor, to execute various function applications of the electronic device and data processing.

The electronic device may implement an audio function such as music playing or recording by using the audio module 170, the speaker 170A, the receiver 170B, the microphone 170C, the application processor, and the like. For specific working principles and functions of the audio module 170, the speaker 170A, the receiver 170B, and the microphone 170C, refer to descriptions in a conventional technology.

The button 190 includes a power button, a volume button, and the like. The button 190 may be a mechanical button, or may be a touch button. The electronic device may receive button input, and generate button signal input related to user settings and function control of the electronic device.

It should be noted that the hardware modules included in the electronic device shown in FIG. 1 are merely described as an example, and do not limit a specific structure of the electronic device. For example, the electronic device may further include another functional module.

For example, a software system of the electronic device provided in this embodiment of this application may use a layered architecture, an event-driven architecture, a microkernel architecture, a microservice architecture, a cloud architecture, or the like. For example, the software system may include but is not limited to an operating system such as Symbian (Symbian), Android (Android), Windows, Apple (iOS), Blackberry (Blackberry), or Harmony (Harmony). This is not limited in this application.

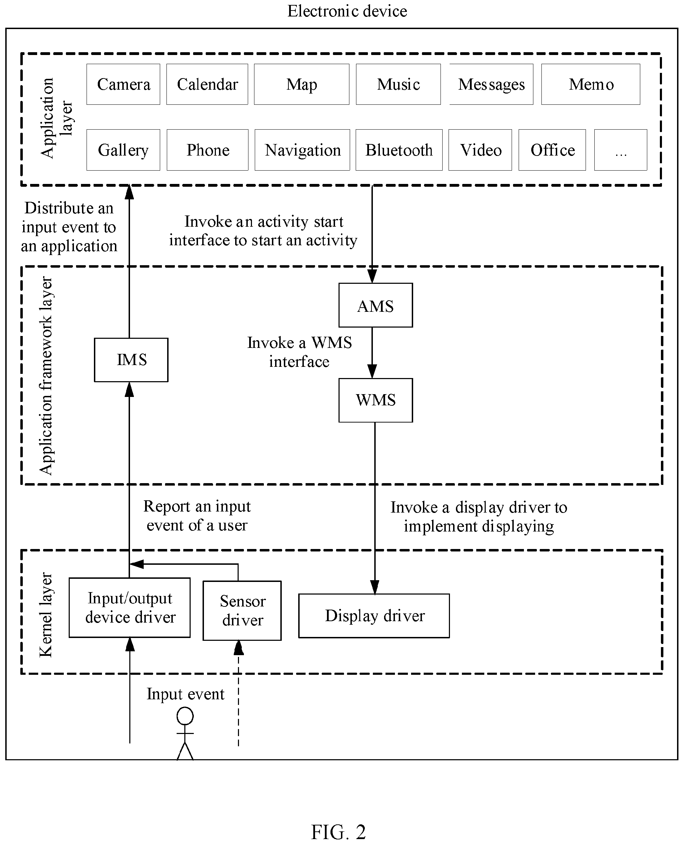

With reference to FIG. 2, FIG. 2 specifically shows a schematic diagram of a software structure of an electronic device according to an embodiment of this application by using an Android (Android) operating system of a layered architecture as an example. In the layered architecture, software may be divided into several layers, and each of the layers has a clear role and task. The layers communicate with each other by using a software interface. As shown in FIG. 2, the software structure of the electronic device may be divided into three layers from top to bottom: an application layer (application layer for short), an application framework layer (framework layer for short), a system library, an Android runtime, and a kernel layer (also referred to as a driver layer).

The application layer may include a series of application packages, for example, applications such as Camera, Gallery, Calendar, Phone, Map, Navigation, WLAN, Bluetooth, Music, Video, Messages, Memo, Office, and Launcher (Launcher). For ease of description, an application is briefly described as an application below. An application on the electronic device may be a native application (for example, an application installed in the electronic device when an operating system is installed before the electronic device is delivered from a factory), or may be a third-party application (for example, an application downloaded and installed by a user by using an application store). This is not limited in this embodiment of this application.

The application framework layer provides an application programming interface (application programming interface, API) and a programming framework for an application at the application layer. As shown in FIG. 2, the application framework layer may include a window manager service (window manager service, WMS), an activity manager service (activity manager service, AMS), and an input manager service (input manager service, IMS). In some embodiments, the application framework layer may further include a content provider, a view system, a phone manager, a resource manager, a notification manager, and the like (not shown in FIG. 2).

The WMS carries data and an attribute that are related to an "interface", and is used to manage a status related to the "interface", for example, used to manage a window program and distribute an event. Managing a window program refers to sequentially outputting a display request of an application to a physical screen or another display device with the assistance of an application server and the WMS. Distributing an event refers to distributing a user event from a keyboard, a physical button, a touchscreen, a mouse, a trackball (trackball), or the like to a corresponding control or window. For example, in this embodiment of this application, distributing an event may be distributing a user time corresponding to a first operation and a second operation of the user on the touchscreen to a corresponding control or window. The window manager service may further obtain a size of a display, determine whether there is a status bar, lock a screen, capture a screen, and the like.

The AMS is responsible for work such as managing an activity (Activity), starting, switching, and scheduling components in the system, and managing and scheduling an application.

The IMS may be configured to perform processing such as translation and encapsulation on an original input event to obtain an input event including more information, and send the input event to the WMS. The WMS stores an area (for example, a control) that is of each application and that can be tapped, position information of a focus window, and the like. Therefore, the WMS can correctly distribute the input event to a specified control or focus window. For example, in this embodiment of this application, the WMS can correctly distribute an input event corresponding to the first operation, the second operation, or a third operation of the user to, for example, an area that is of the memo and that can be tapped.

The kernel layer is a layer between hardware and software. As shown in FIG. 2, the kernel layer may include a display driver, an input/output device driver (for example, a keyboard, a touchscreen, a headset, a speaker, or a microphone), and a sensor driver. In some embodiments, the kernel layer may further include a device node, a camera driver, an audio driver, and the like. The user performs an input operation by using an input device. The kernel layer may generate a corresponding original input event based on the input operation, and store the original input event in the device node. The input/output device driver can detect the input event of the user, for example, an operation of starting an application (for example, the memo application in this embodiment of this application) by the user, and a sliding operation performed by the user on the touchscreen, for example, the first operation, the second operation, the third operation, or a fourth operation in this embodiment of this application. For example, the sliding operation performed by the user on the touchscreen may be a line drawing operation, a circle drawing operation, a sliding and writing operation, or the like.

It should be noted that FIG. 2 shows a schematic diagram of a software structure of an electronic device only by using an Android system of a layered architecture as an example. A specific architecture of a software system of the electronic device is not limited in this application. For a specific description of a software system of another architecture, refer to a conventional technology.

In this embodiment of this application, an object annotated by the user may be any content on a display interface that supports input of an annotation by using an annotation layer. For example, an object annotated by the user in a handwriting manner may be any text content on a display interface that supports input of a handwritten annotation by using an annotation layer. The interface may be an application interface, or may be an applet interface. This is not limited in this application. For example, in this embodiment of this application, an object annotated by the user may be text content on a memo interface, content (for example, text or a picture) on an office application (for example, Word or Notepad) interface, or the like.

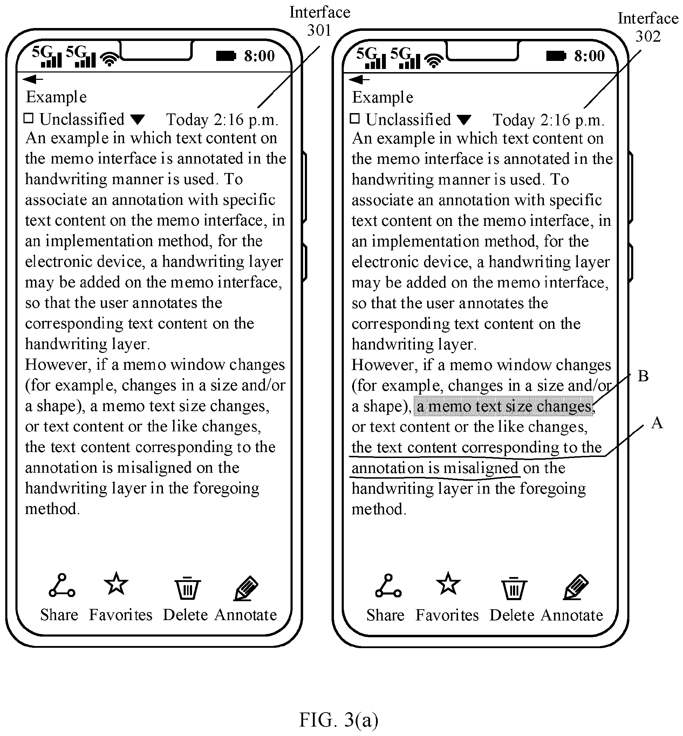

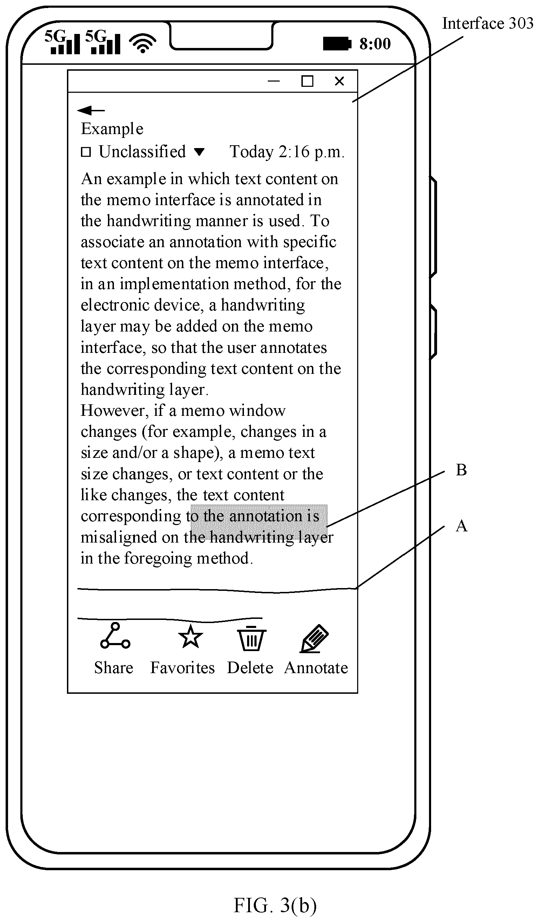

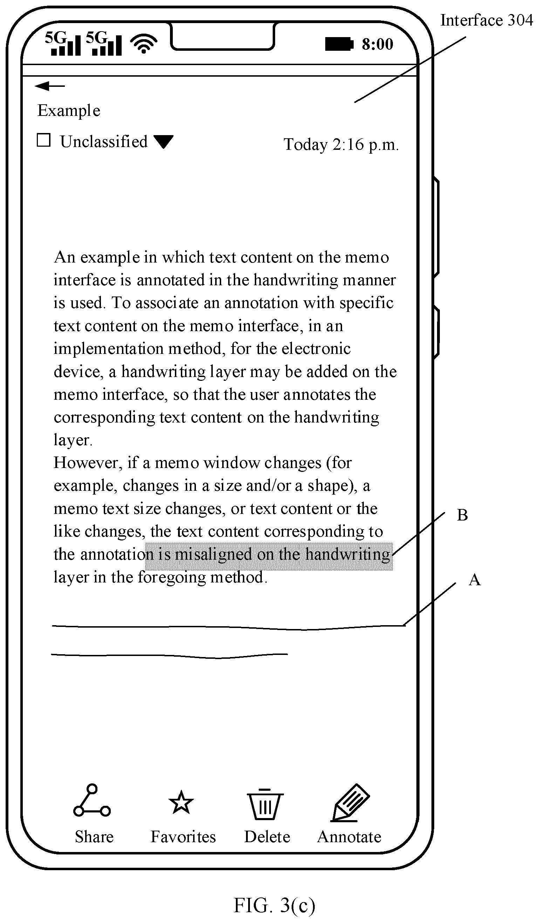

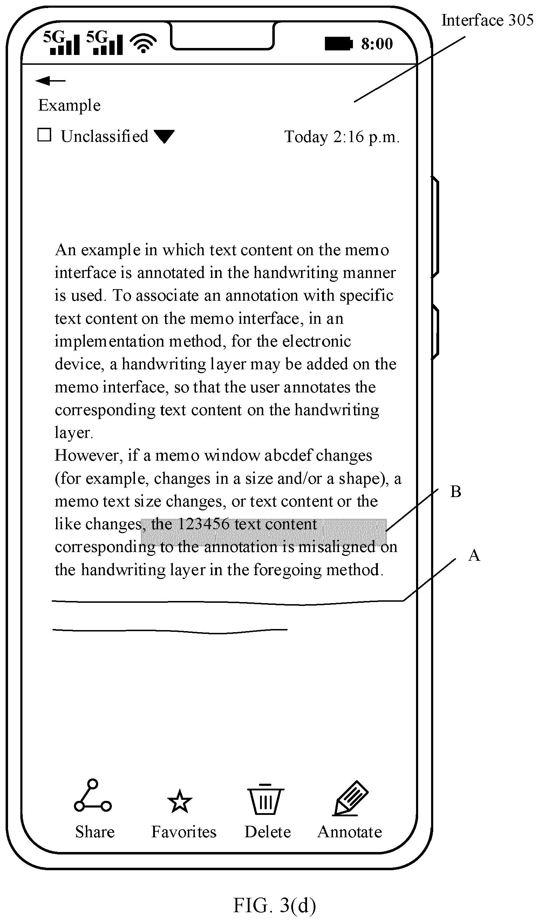

For example, an example in which the display interface is a memo interface is used. With reference to FIG. 3(a), FIG. 3(b), FIG. 3(c), and FIG. 3(d), FIG. 3(a), FIG. 3(b), FIG. 3(c), and FIG. 3(d) show a process of displaying a conventional handwritten annotation for text content by using a handwritten annotation for text content on a memo interface as an example. As shown in FIG. 3(a), FIG. 3(b), FIG. 3(c), and FIG. 3(d), it is assumed that the memo interface is an interface 301 shown in FIG. 3(a). In response to a highlighting operation performed by the user on four words in total of "a memo window changes" on the interface 301 and an underlining operation performed by the user on nine words in total of "the text content corresponding to the annotation is misaligned" on the interface 301, the memo displays an interface 302 shown in FIG. 3(a). On the interface 302, an underline annotation A and a highlight annotation B that are entered by the user are displayed. The underline annotation A is for the text "the text content corresponding to the annotation is misaligned". The highlight annotation B is for the text "a memo window changes".

Specifically, the highlighting operation performed by the user on the four words in total of "a memo window changes" on the interface 301 and the underlining operation performed by the user on the nine words in total of "the text content corresponding to the annotation is misaligned" on the interface 301 are generally entered by the user on an annotation layer displayed on the memo interface in an overlay manner. For example, the annotation layer may be displayed on the memo interface in the overlay manner by the electronic device in response to a received tap operation performed by the user on an "Annotate" button on the interface 301. In some embodiments, as shown in FIG. 3(a), the annotation layer is invisible to the user. Therefore, for the user, annotating appears to be directly performed on the memo interface.

However, the underline annotation and the highlight annotation are actually not directly edited on the memo interface, but are edited on the annotation layer. Therefore, if a change such as zooming out of a window of the memo interface shown in FIG. 3(b), or a reduction in a text size on the memo interface shown in FIG. 3(c), or addition of text content on the memo interface shown in FIG. 3(d) occurs, as shown in an interface 303 in FIG. 3(b), an interface 304 in FIG. 3(c), and an interface 305 in FIG. 3(d), text content corresponding to the underline annotation A and the highlight annotation B on the annotation layer is misaligned.

To resolve the problem of misalignment between an annotation and corresponding content on the display interface caused by an interface change such as a window change, a text size change, a picture size change, or content addition or deletion of the display interface in the conventional annotation display process, an embodiment of this application provides an annotation display method. In the method, an annotation entered by a user is bound to corresponding interface content, and the binding relationship is stored, so that when there is a change such as a window change, a text size change, a picture size change, or a content change of a display interface, the annotation may be re-rendered based on the stored binding relationship at a position corresponding to the interface content. In this way, the problem of misalignment between an annotation and corresponding content on the display interface may be resolved.

In this embodiment of this application, a window change of the display interface may include but is not limited to a window size change and a window shape change. The window size change is, for example, a window change from large to small or from small to large. The window shape change is, for example, a window change from a landscape state to a portrait state, or a window change from a portrait state to a landscape state, or a window change based on a user operation (for example, a change from a rectangle to a square as the user performs a dragging operation).

It should be noted that, in this embodiment of this application, FIG. 3(a), FIG. 3(b), FIG. 3(c), and FIG. 3(d) only use the underline annotation and the highlight annotation as an example to show the problem of misalignment between an annotation and corresponding content on the display interface. Specific forms of an underline and a highlight line are not limited in this application. For example, the underline and the highlight line may be straight lines, wavy lines, or the like.

In addition, in the annotation display method provided in this embodiment of this application, an annotation (for example, a handwritten annotation) may include but is not limited to the underline annotation and the highlight annotation. For example, the annotation may further include strikeout, selection, a graphic mark, a text annotation, or the like. A specific form of the annotation is not limited in this application.

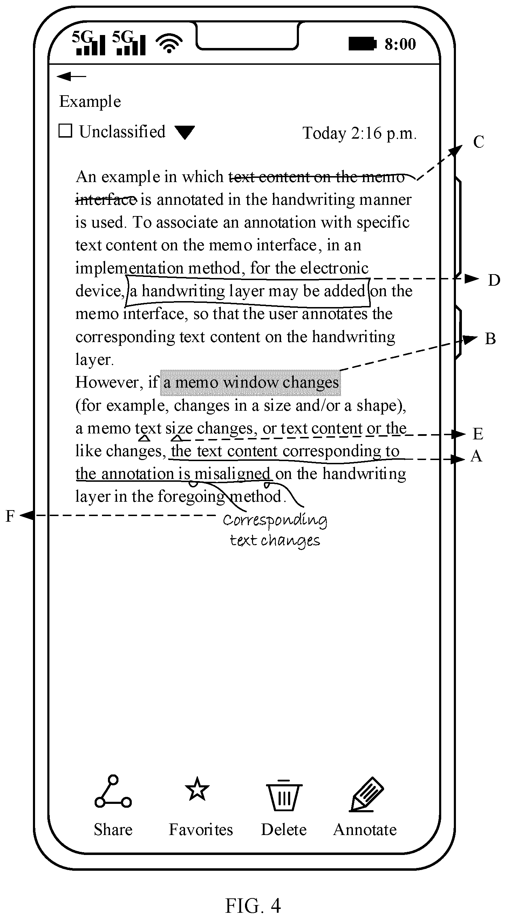

For example, with reference to FIG. 4, FIG. 4 shows an example diagram of several handwritten annotations for text content according to an embodiment of this application. As shown in FIG. 4, the handwritten annotations may include an underline annotation A and a highlight annotation B that are shown in FIG. 4, and may further include a strikeout annotation C, a selection mark annotation D, a graphic mark annotation E, and a text annotation F that are shown in FIG. 4.

It should be noted that, in this embodiment of this application, in addition to the rectangular selection mark D shown in FIG. 4, a selection mark may further include other forms of selection, for example, round selection, elliptical selection, or triangular selection. In addition to the triangle mark E that is shown in FIG. 4 and that is located below text "text size" on a memo interface, a graphic mark annotation may further include a mark that is in any shape and at any position relative to text content on the memo interface. For example, a graphic mark may be located above text, below text, or on text on the memo interface. For example, the graphic mark may be a circle, a triangle, or the like. In addition to the text annotation F that is shown in FIG. 4, that is located in a blank area, and for which text content corresponding to the text annotation is marked by using a connection line, a text annotation may further include a text annotation that is at any position relative to text content on the memo interface, for example, a text annotation that is located at a position above or below corresponding text on the memo interface. For another example, the text annotation may alternatively be located at any other position far away from the corresponding text content on the memo interface, and the text content that is on the memo interface and that is corresponding to the text annotation is marked by using a connection line. This application does not limit a specific relative position between a handwritten annotation and text content on the memo interface, a specific shape of the handwritten annotation, or the like.

In addition, it should be noted that, in this embodiment of this application, a handwritten annotation for content on a display interface is manually entered by a user by using a hand, a stylus, a virtual stylus, or the like. Therefore, it is usually difficult to obtain a standard line shape or graphic similar to a computer drawing. Therefore, in this embodiment of this application, an annotation such as a line shape or a graphic that is manually entered by the user may be a line shape or a graphic close to a standard shape. For example, the straight line may be a curve close to a straight line, the circle may be a similar circle close to a standard circle, and the triangle may be a similar triangle close to a standard triangle.

With reference to a specific embodiment, the following specifically describes the technical solution provided in this embodiment of this application by using an example in which a display interface is a memo interface.

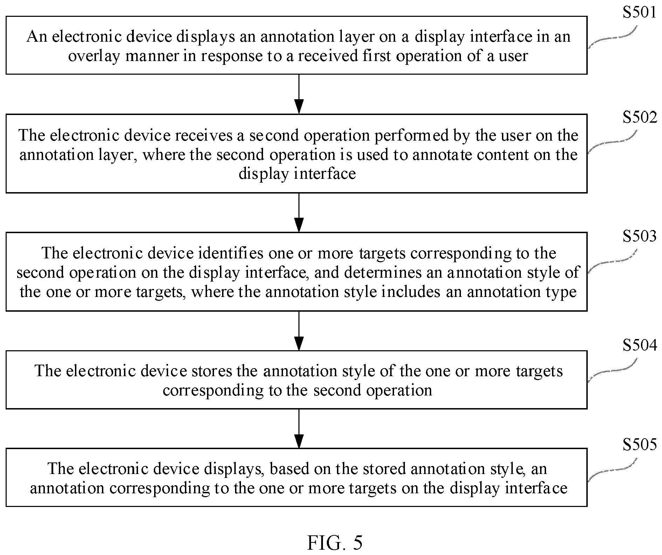

With reference to FIG. 5, FIG. 5 shows a method for displaying a handwritten annotation according to an embodiment of this application. As shown in FIG. 5, the method for displaying a handwritten annotation provided in this embodiment of this application may include the following steps S501 to S505.

S501. An electronic device displays an annotation layer on a display interface in an overlay manner in response to a received first operation of a user.

The first operation is used to trigger manual annotation. The display interface is a display interface of any application or applet that supports input of an annotation by using the annotation layer, for example, the memo interface 301 shown in FIG. 3(a), or for another example, an interface of an office application (for example, Word or Notepad). A specific application type corresponding to the display interface is not limited in this application.

In this embodiment of this application, the first operation of the user may include but is not limited to an operation of selecting a virtual stylus type by the user and an operation of selecting an annotation pattern by the user. The virtual stylus type may include but is not limited to a virtual pencil, a virtual fountain pen, a virtual ball-point pen, a virtual marker, or the like. The annotation pattern may include but is not limited to highlighting, underlining, striking out, selecting, graphically marking, textually annotating, or the like.

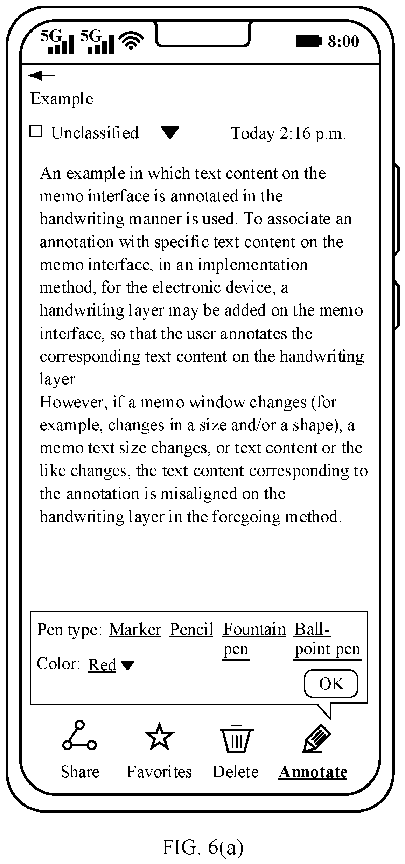

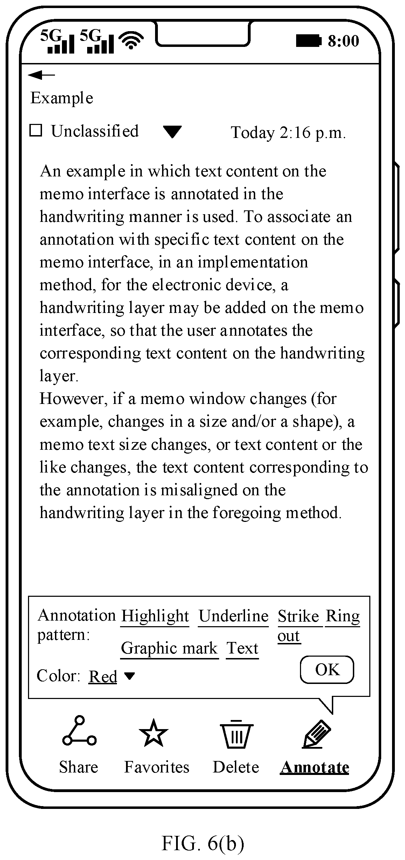

With reference to FIG. 6(a) and FIG. 6(b), FIG. 6(a) and FIG. 6(b) show example diagrams of two interfaces used to perform a first operation according to an embodiment of this application. FIG. 6(a) shows an example diagram of an interface used to select a virtual stylus type. As shown in FIG. 6(a), the interface may include an option box for the user to select a pen type (that is, the virtual stylus type) such as a marker (that is, a virtual marker), a pencil (that is, a virtual pencil), a fountain pen (that is, a virtual fountain pen), or a ball-point pen (that is, a virtual ball-point pen). FIG. 6(b) shows an example diagram of an interface used to select an annotation pattern. As shown in FIG. 6(b), the interface may include an annotation pattern such as highlighting, underlining, striking out, selecting, graphically marking, or textually annotating.

The select box that is used to select a virtual stylus type and that is shown in FIG. 6(a) or a select box that is used to select an annotation pattern and that is shown in FIG. 6(b) may be displayed on the memo interface by the electronic device in response to an operation of tapping an "Annotate" button at the bottom of the memo interface by the user.

In some embodiments, the interface used to perform the first operation may further display a text color option for the user to select, as shown in FIG. 6(a) and FIG. 6(b). In some other embodiments, the interface used to perform the first operation may further display other options such as a line shape (for example, a solid line, a dashed line, or a dash-dot line), a line thickness, and a line pattern (for example, a straight line or a curve) (not shown in FIG. 6(a) or FIG. 6(b)). This is not limited in this application.

It should be noted that, in FIG. 6(a) and FIG. 6(b), an example in which the electronic device pops up the virtual stylus type or annotation pattern option box in response to tapping on the "Annotate" button on the memo interface by the user is used. A pop-up manner of the virtual stylus type or annotation pattern option box is not limited in this embodiment of this application. For example, the virtual stylus type or annotation pattern option box may alternatively be displayed on the memo interface by the electronic device in response to a preset gesture (for example, a "-"-shaped slide gesture, a three-finger slide gesture, a touch and hold gesture in a blank area, a double-tap gesture in a blank area, or a gesture of sliding inward from an edge of a touchscreen) of the user on the memo interface. For another example, the virtual stylus type or annotation pattern option box may alternatively be always displayed on the memo interface. This is not limited in this application. In this embodiment of this application, a specific pop-up position of the virtual stylus type or annotation pattern option box is not limited either. For example, the option box may be located at a position shown in FIG. 6(a) or FIG. 6(b), or may be located at the top of the memo interface, or may be located above text content on the memo.

S502. The electronic device receives a second operation performed by the user on the annotation layer, where the second operation is used to annotate content on the display interface.

Generally, there is a correspondence between the second operation and the first operation.

For example, if the first operation is an operation of selecting a virtual marker by the user or selecting a highlight annotation pattern by the user, the second operation is generally a sliding operation performed by the user on some content on the display interface after the user selects the virtual marker or selects the highlight annotation pattern. For example, the second operation may be a sliding operation performed by the user on one or more words on the display interface.

For another example, if the first operation is an operation of selecting a virtual pencil, a virtual fountain pen, or a virtual ball-point pen by the user or selecting a strikeout annotation pattern by the user, the second operation may be a sliding operation performed by the user on some content on the display interface, or a sliding operation performed by the user below some content on the display interface, or a selection operation performed by the user on some content on the display interface, or a graphically marking operation performed by the user below or on some content on the display interface, or a textually annotating operation performed by the user on some content on the display interface after the user selects the virtual pencil, the virtual fountain pen, or the virtual ball-point pen or selects the strikeout annotation pattern.

S503. The electronic device identifies one or more targets corresponding to the second operation on the display interface, and determines an annotation style of the one or more targets, where the annotation style includes an annotation type.

The electronic device identifies the one or more targets corresponding to the second operation on the display interface, that is, the electronic device identifies an operation object of the second operation.

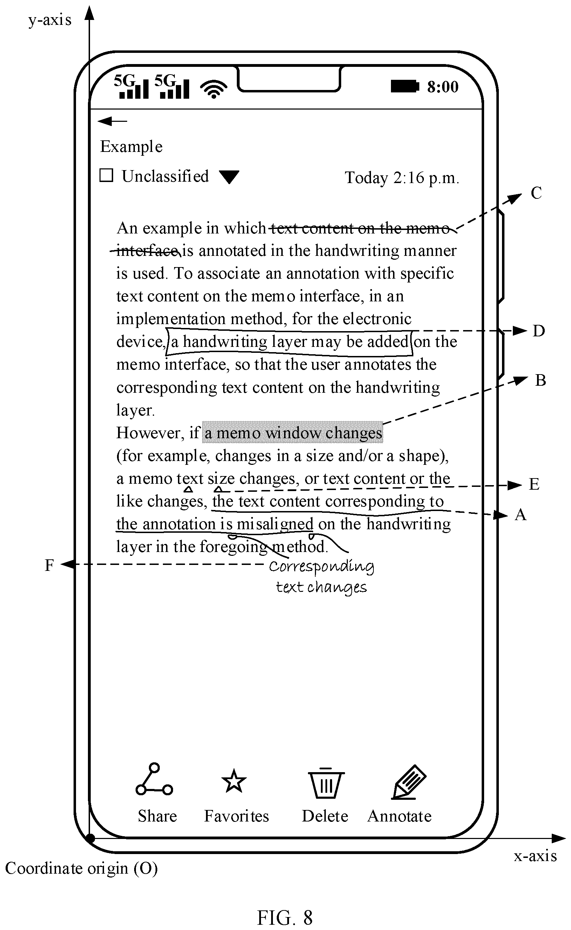

For example, it is assumed that the second operation is a sliding operation performed by the user on content on the display interface after the user selects the virtual marker or selects the highlight annotation pattern. In this case, the second operation is used to highlight the content, and an object of the second operation is content (for example, one or more words) that is on the display interface and that overlaps a sliding track of the user when the user performs the second operation. For example, the second operation is a sliding operation performed by the user on text "a memo window changes" on a memo interface shown in FIG. 8. In this case, an object of the second operation is one or more words that are on the display interface and that overlap a sliding track of the user, that is, four words in total of "a memo window changes".

For another example, it is assumed that the second operation is a sliding operation performed by the user on some content on the display interface after the user selects the virtual pencil, the virtual fountain pen, or the virtual ball-point pen or selects the strikeout annotation pattern. In this case, the second operation is used to strike out the content, and an object of the second operation is content (for example, one or more words) that is on the display interface and that overlaps a sliding track of the user when the user performs the second operation. For example, the second operation is a sliding operation performed by the user on text "text content on the memo interface" on the memo interface shown in FIG. 8, and an object of the second operation is one or more words that overlap a sliding track of the user, that is, six words in total of "text content on the memo interface".

For another example, it is assumed that the second operation is a sliding operation performed by the user below some content on the display interface after the user selects the virtual pencil, the virtual fountain pen, or the virtual ball-point pen or selects the strikeout annotation pattern. In this case, the second operation is used to underline the content, and an object of the second operation is content (for example, one or more words) that is on the display interface and that is located above a sliding track of the user when the user performs the second operation. For example, the second operation is a sliding operation performed by the user below text "the text content corresponding to the annotation is misaligned" on the memo interface shown in FIG. 8, and an object of the second operation is one or more words located above a sliding track of the user, that is, nine words in total of "the text content corresponding to the annotation is misaligned".

For another example, it is assumed that the second operation is a selection operation performed by the user on some content on the display interface after the user selects the virtual pencil, the virtual fountain pen, or the virtual ball-point pen or selects the strikeout annotation pattern. In this case, the second operation is used to select the content, and an object of the second operation is content (for example, one or more words) that is on the display interface and that is located inside a selection track of the user when the user performs the second operation. For example, the second operation is a selection operation performed by the user on text "a handwriting layer may be added" on the memo interface shown in FIG. 8, and an object of the second operation is one or more words located inside a selection track of the user, that is, six words in total of "a handwriting layer may be added".

For another example, it is assumed that the second operation is a graphically marking operation performed by the user below or on some content on the display interface after the user selects the virtual pencil, the virtual fountain pen, or the virtual ball-point pen or selects the strikeout annotation pattern. In this case, the second operation is used to make a graphic mark on the content, and an object of the second operation is content (for example, one or more words) that is on the display interface and that is located above or below a graphic marked by the user when the user performs the second operation. For example, the second operation is a triangle marking operation performed by the user below text "text size" on the memo interface shown in FIG. 8, and an object of the second operation is one or more words located above a triangle marked by the user, that is, two words in total of "text size".

For another example, it is assumed that the second operation is a textually annotating operation performed by the user on some content on the display interface after the user selects the virtual pencil, the virtual fountain pen, or the virtual ball-point pen or selects the strikeout annotation pattern. In this case, the second operation is used to textually annotate the content, and an object of the second operation is content (for example, one or more words) that is on the display interface and that is located near (for example, above or below) a text annotation or associated with the text annotation by using a connection line. For example, the second operation is an operation that the user makes a text annotation in a blank area on the memo interface shown in FIG. 8 and associates the text annotation with "is misaligned" by using a connection line, and an object of the second operation is one or more words associated with the text annotation by using a connection line, that is, two words in total of "is misaligned".

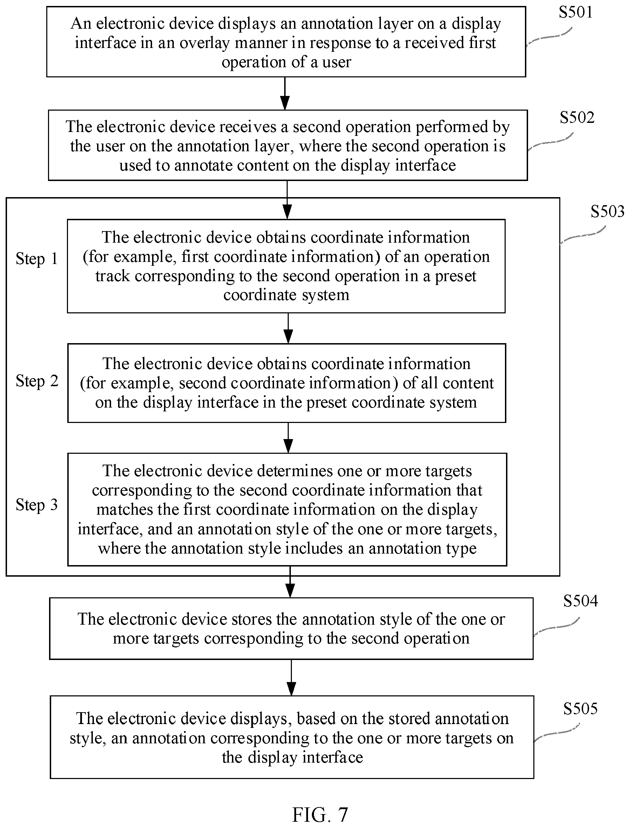

In some embodiments, as shown in FIG. 7, the electronic device may perform the following step 1 to step 3 to identify the one or more targets corresponding to the second operation and determine the annotation style of the one or more targets (that is, step S503).

Step 1: The electronic device obtains coordinate information (for example, first coordinate information) of an operation track corresponding to the second operation in a preset coordinate system.

The preset coordinate system may be a preset coordinate system of the electronic device, a world coordinate system, a ground coordinate system, or the like. This is not limited in this application. For example, the preset coordinate system of the electronic device may be a two-dimensional coordinate system corresponding to the touchscreen of the electronic device. An example in which the electronic device is a smartphone is used. As shown in FIG. 8, the two-dimensional coordinate system may be a coordinate system including a lower left corner of the smartphone being a coordinate origin O, a lower short side being an x-axis, and a left long side being a y-axis when the smartphone is in a portrait state and the touchscreen faces the user.

When the preset coordinate system is the two-dimensional coordinate system xOy (that is, a two-dimensional coordinate system including the lower left corner of the smartphone being a coordinate origin, the lower short side being an x-axis, and the left long side being a y-axis) shown in FIG. 8, the first coordinate information is coordinate information of the operation track corresponding to the second operation in the two-dimensional coordinate system xOy shown in FIG. 8.

Step 2: The electronic device obtains coordinate information (for example, second coordinate information) of all content on the display interface in the preset coordinate system.

For example, it is assumed that the display interface is the memo interface shown in FIG. 3(a). In this case, the electronic device may calculate coordinate information of each word in the preset coordinate system based on parameters such as a row height and a font size of all text content on the memo interface.

To ensure accurate matching between the operation track and corresponding text, a uniform coordinate reference system needs to be used for the preset coordinate system in step 2 and step 1. For example, if coordinate information of the operation track corresponding to the second operation in the two-dimensional coordinate system shown in FIG. 8 is determined in step 1, the second coordinate information determined in step 2 is coordinate information of all content on the display interface in the two-dimensional coordinate system shown in FIG. 8.

The memo interface and the preset coordinate system shown in FIG. 8 are used as an example. The second coordinate information is coordinate information of all text content on the memo interface in the two-dimensional coordinate system xOy shown in FIG. 8.

Step 3: The electronic device determines one or more targets corresponding to the second coordinate information that matches the first coordinate information on the display interface, and an annotation style of the one or more targets, where the annotation style includes an annotation type.

In this embodiment of this application, "matching" may include but is not limited to overlapping between positions corresponding to the first coordinate information and the second coordinate information, an up-down position relationship between the positions corresponding to the first coordinate information and the second coordinate information, and a position inclusion relationship or a position connection relationship between the positions corresponding to the first coordinate information and the second coordinate information, and is specifically determined by the virtual stylus type or the annotation pattern selected by the first operation and the operation track of the second operation.

In addition, in this embodiment of this application, the annotation type may include but is not limited to a highlight line, an underline, strikeout, selection, a graphic mark, a text annotation, or the like. The annotation type of the one or more targets corresponding to the second coordinate information that matches the first coordinate information on the display interface may alternatively be determined based on the first operation with reference to a specific situation of the second operation.

For example, in this embodiment of this application, different virtual stylus types or different annotation pattern options may correspond to different annotation types. For example, the virtual pencil, the virtual fountain pen, and the virtual ball-point pen may correspond to an underline, strikeout, selection, a graphic mark, a text annotation, or the like. The virtual marker may correspond to a highlight line. Which of an underline, strikeout, selection, a graphic mark, and a text annotation that the virtual pencil, the virtual fountain pen, and the virtual ball-point pen specifically correspond to needs to be determined based on a specific operation track (for example, an operation position and an entered line shape or graphic) of the second operation of the user.

The memo interface and the preset coordinate system shown in FIG. 8 are used as an example. If the second operation is a sliding operation on the text "a memo window changes" on the memo interface after the user uses the virtual marker or selects the highlight annotation pattern, the electronic device determines, based on the first coordinate information (that is, coordinate information of a sliding track of the user on the text "a memo window changes" on the memo interface in the preset coordinate system) and the second coordinate information (that is, coordinate information of each word on the memo interface in the preset coordinate system), that the positions corresponding to the first coordinate information and the second coordinate information overlap, and more specifically, a position corresponding to the second coordinate information is located in a position range corresponding to the first coordinate information. In this case, one or more words that are determined by the electronic device and that are corresponding to the second coordinate information that matches the first coordinate information are one or more words that overlap a position corresponding to the first coordinate information, that is, words of "a memo window changes" that the user slides across on the touchscreen. In addition, the electronic device determines that an annotation type corresponding to "a memo window changes" is a highlight line.

If the second operation is a sliding operation on "text content on the memo interface" after the user uses the virtual pencil, the virtual fountain pen, or the virtual ball-point pen or selects the strikeout annotation pattern, the electronic device determines, based on the first coordinate information (that is, coordinate information of a sliding track of the user on the text "text content on the memo interface" on the memo interface in the preset coordinate system) and the second coordinate information (that is, coordinate information of each word on the memo interface in the preset coordinate system), that the positions corresponding to the first coordinate information and the second coordinate information overlap, and more specifically, a position corresponding to the first coordinate information is located in a position range corresponding to the second coordinate information. In this case, one or more words that are determined by the electronic device and that are corresponding to the second coordinate information that matches the first coordinate information are one or more words that overlap the position corresponding to the first coordinate information, that is, words of "text content on the memo interface" that the user slides across on the touchscreen. In addition, the electronic device determines that an annotation type corresponding to "text content on the memo interface" is strikeout.

If the second operation is a sliding operation below "the text content corresponding to the annotation is misaligned" after the user uses the virtual pencil, the virtual fountain pen, or the virtual ball-point pen or selects an underline annotation pattern, the electronic device determines, based on the first coordinate information (that is, coordinate information of a sliding track of the user below the text "the text content corresponding to the annotation is misaligned" on the memo interface in the preset coordinate system) and the second coordinate information (that is, coordinate information of each word on the memo interface in the preset coordinate system), that the positions corresponding to the first coordinate information and the second coordinate information have an up-down position relationship, and more specifically, a position corresponding to the first coordinate information is located within a preset distance below a position corresponding to the second coordinate information. In this case, one or more words that are determined by the electronic device and that are corresponding to the second coordinate information that matches the first coordinate information are one or more words that have an up-down position relationship with the position corresponding to the first coordinate information, that is, words of "the text content corresponding to the annotation is misaligned" located above a touch track of the user on the touchscreen. In addition, the electronic device determines that an annotation type corresponding to "the text content corresponding to the annotation is misaligned" is an underline.

If the second operation is a triangle marking operation below "text size" after the user uses the virtual pencil, the virtual fountain pen, or the virtual ball-point pen or selects a graphic mark annotation pattern, the electronic device determines, based on the first coordinate information (that is, coordinate information of a triangle mark made by the user below the text "text size" on the memo interface in the preset coordinate system) and the second coordinate information (that is, coordinate information of each word on the memo interface in the preset coordinate system), that the positions corresponding to the first coordinate information and the second coordinate information have an up-down position relationship, and more specifically, a position corresponding to the first coordinate information is located within a preset distance below a position corresponding to the second coordinate information. In this case, one or more words that are determined by the electronic device and that are corresponding to the second coordinate information that matches the first coordinate information are one or more words that have an up-down position relationship with the position corresponding to the first coordinate information, that is, words of "text size" located above a graphic touch track of the user on the touchscreen. In addition, the electronic device determines that an annotation type corresponding to "text size" is a graphic mark (more specifically, a triangle mark).

If the second operation is a selection operation on "a handwriting layer may be added" after the user uses the virtual pencil, the virtual fountain pen, or the virtual ball-point pen or selects an annotation pattern, the electronic device determines, based on the first coordinate information (that is, coordinate information of a selection track of the user on the text "a handwriting layer may be added" on the memo interface in the preset coordinate system) and the second coordinate information (that is, coordinate information of each word on the memo interface in the preset coordinate system), that the positions corresponding to the first coordinate information and the second coordinate information have a position inclusion relationship, and more specifically, a position corresponding to the second coordinate information is located within a position corresponding to the first coordinate information. In this case, one or more words that are determined by the electronic device and that are corresponding to the second coordinate information that matches the first coordinate information are one or more words that have a position inclusion relationship with the position corresponding to the first coordinate information of the user, that is, words of "a handwriting layer may be added" surrounded by a touch track of the user on the touchscreen. In addition, the electronic device determines that an annotation type corresponding to "a handwriting layer may be added" is selection.

If the second operation is an operation that the user makes a text annotation "Corresponding text changes" in a blank area and associates the text annotation with "is misaligned" by using a connection line after the user uses the virtual pencil, the virtual fountain pen, or the virtual ball-point pen or selects a text annotation pattern, the electronic device determines, based on the first coordinate information (that is, coordinate information of a connection line used to implement association with the text annotation "Corresponding text changes" made by the user on the memo interface in the preset coordinate system) and the second coordinate information (that is, coordinate information of each word on the memo interface in the preset coordinate system), that the positions corresponding to the first coordinate information and the second coordinate information have a position connection relationship. In this case, one or more words that are determined by the electronic device and that are corresponding to the second coordinate information that matches the first coordinate information are one or more words that have a connection relationship with a position corresponding to the first coordinate information of the user, that is, words of "is misaligned" connected, by using a connection line, to the text entered by the user on the touchscreen. In addition, the electronic device determines that an annotation type corresponding to "a handwriting layer may be added" is a text annotation.

In some examples, if the electronic device identifies and determines that the second operation has no corresponding target on the display interface, the electronic device stores only an annotation entered by the user by using the second operation, and does not establish a correspondence with content on the display interface.

That the second operation has no corresponding target on the display interface means that there is no corresponding content on the display interface in a preset range corresponding to the second operation. For example, it is assumed that the second operation is a sliding operation after the user uses the virtual pencil, the virtual fountain pen, or the virtual ball-point pen or selects the underline annotation pattern. In this case, that the second operation has no corresponding target on the display interface means that there is no corresponding target on the display interface in a preset range above or below a sliding track. For another example, it is assumed that the second operation is a sliding operation after the user uses the virtual pencil, the virtual fountain pen, or the virtual ball-point pen or selects the strikeout annotation pattern. In this case, that the second operation has no corresponding target on the display interface means that there is no corresponding target on the display interface under a sliding track. For another example, it is assumed that the second operation is a sliding operation after the user uses the virtual marker or selects the highlight annotation pattern. In this case, that the second operation has no corresponding target on the display interface means that there is no corresponding target on the display interface under a sliding track. For another example, it is assumed that the second operation is a graphically marking operation after the user uses the virtual marker or selects the graphic mark annotation pattern. In this case, that the second operation has no corresponding target on the display interface means that there is no corresponding target on the display interface in a preset range above or below a graphic mark. For another example, it is assumed that the second operation is a selection operation after the user uses the virtual pencil, the virtual fountain pen, or the virtual ball-point pen or selects the annotation pattern. In this case, that the second operation has no corresponding target on the display interface means that there is no corresponding target on the display interface in a circle. For another example, it is assumed that the second operation is a textually annotating operation after the user uses the virtual pencil, the virtual fountain pen, or the virtual ball-point pen or selects the text annotation pattern. In this case, that the second operation has no corresponding target on the display interface means that the text annotation is not associated with any target. For example, the text annotation is not connected to any content on the display interface by using a connection line, or there is no content on the display interface in a preset range of the text annotation.

In some embodiments, the annotation style may further include a line shape of the highlight line, the underline, the strikeout, the selection, or the graphic mark, or a line shape of a connection line between the text annotation and a corresponding target, for example, whether the line shape is a solid line, a dashed line, or a dash-dot line, whether the line shape is a straight line or a curve, and a thickness of the line shape.

In some embodiments, the annotation style may further include a shape of a selection track, for example, whether the shape of the selection track is a circle, a rectangle, or a triangle.

In some embodiments, the annotation style may further include a relative position between an annotation and a corresponding target, for example, whether a graphic mark is located above, below, or on text of a corresponding target; for another example, whether a text annotation is located above or below a corresponding target; and for another example, a position of a text annotation in the preset coordinate system.

The memo interface shown in FIG. 8 is used as an example. The text "a memo window changes" corresponds to the highlight line, the text "text content on the memo interface" corresponds to the strikeout, "the text content corresponding to the annotation is misaligned" corresponds to the underline, "text size" corresponds to the triangle mark below the text, "a handwriting layer may be added" corresponds to the rectangular selection, and "is misaligned" corresponds to the text annotation "Corresponding text changes" that is connected to "is misaligned" by using a solid curve and that is located in the blank area below "is misaligned".

S504: The electronic device stores the annotation style of the one or more targets corresponding to the second operation.

In some embodiments, the annotation style may be independent of text information corresponding to content on the display interface, and be separately stored in text information corresponding to annotation content (that is, content on the annotation layer).

In some other embodiments, the annotation style may be stored in text information corresponding to content on the display interface. Text information in a hypertext markup language (hypertext markup language, HTML) format is used as an example. The following shows an example of an annotation style stored in the electronic device:

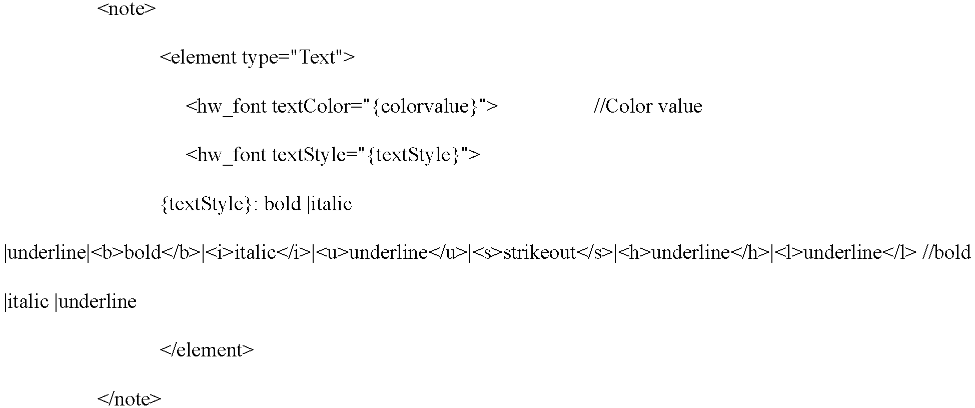

S505. The electronic device displays, based on the stored annotation style, an annotation corresponding to the one or more targets on the display interface.

For example, when performing interface rendering, the electronic device may render, at a corresponding position of the one or more targets based on the stored annotation style, an annotation entered by the user. The "corresponding position" may be determined based on a relative position between the annotation represented by the annotation style and the target on the display interface.

The memo interface shown in FIG. 8 is used as an example. Based on the stored annotation style, the electronic device renders an underline below the text "the text content corresponding to the annotation is misaligned", to obtain an underline annotation A; renders a highlight line on the text "a memo window changes", to obtain a highlight annotation B; renders strikeout on the text "text content on the memo interface", to obtain a strikeout annotation C; renders rectangular selection around the text "a handwriting layer may be added", to obtain a selection mark annotation D; renders a triangle mark below the text "text size", to obtain a graphic mark annotation E; and renders, in the blank area below the text "is misaligned", the text annotation "Corresponding text changes" that is connected to the text "is misaligned" by using a solid curve, to obtain a text annotation F.

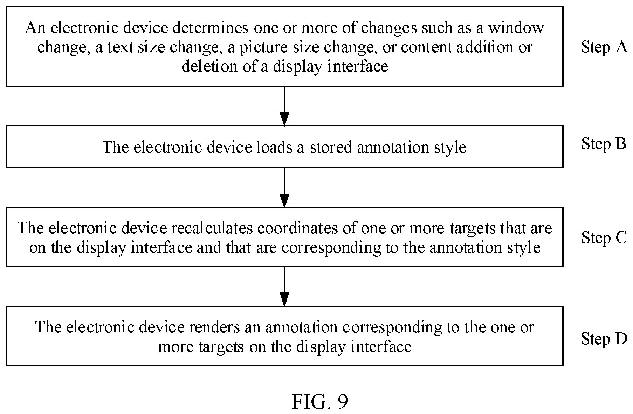

In some embodiments, when there is a change such as a window change, a text size change, a picture size change, and/or content addition or deletion, the displaying, by the electronic device based on the stored annotation style, an annotation corresponding to the one or more targets on the display interface may specifically include step A to step D shown in FIG. 9.

Step A: The electronic device determines one or more of changes such as a window change, a text size change, a picture size change, or content addition or deletion of the display interface.

Step B: The electronic device loads the stored annotation style.

Step C: The electronic device recalculates coordinates of the one or more targets that are on the display interface and that are corresponding to the annotation style.

Step D: The electronic device renders the annotation corresponding to the one or more targets on the display interface.

According to the solution provided in this embodiment of this application, an annotation style corresponding to an annotation entered by the user is bound to corresponding interface content, so that when there is a change such as a window change, a text size change, a picture size change, or a content change of the display interface, the annotation corresponding to the interface content is rendered based on a stored binding relationship between the annotation style and the interface content, and a problem of misalignment between an annotation and corresponding content on the display interface is not caused by out-of-synchronization between the annotation and the change such as a window change, a text size change, a picture size change, or a content change of the display interface. For example, when there is a change such as a window change, a text size change, a picture size change, or a content change of the display interface, the electronic device may correspondingly redetermine a display position, a size, or the like of the annotation, to keep a correspondence with the interface content unchanged.

For example, in some embodiments, it is assumed that the electronic device receives a third operation of the user. In this case, in response to the received third operation of the user, the electronic device displays, based on the stored annotation style, the annotation corresponding to the one or more targets on the display interface. The third operation of the user may include but is not limited to one or more of the following: an operation of changing a window size of the display interface by the user, an operation of changing a window shape of the display interface by the user, an operation of changing content on the display interface by the user, and an operation of changing a size of content on the display interface by the user.

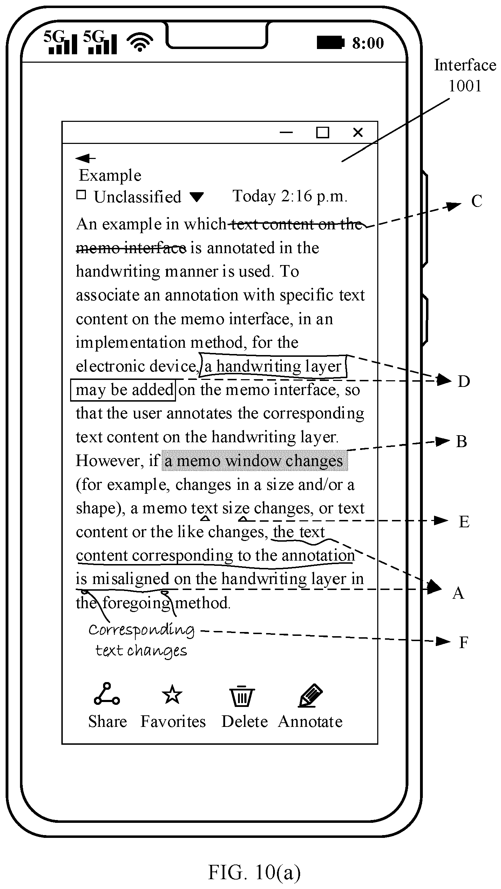

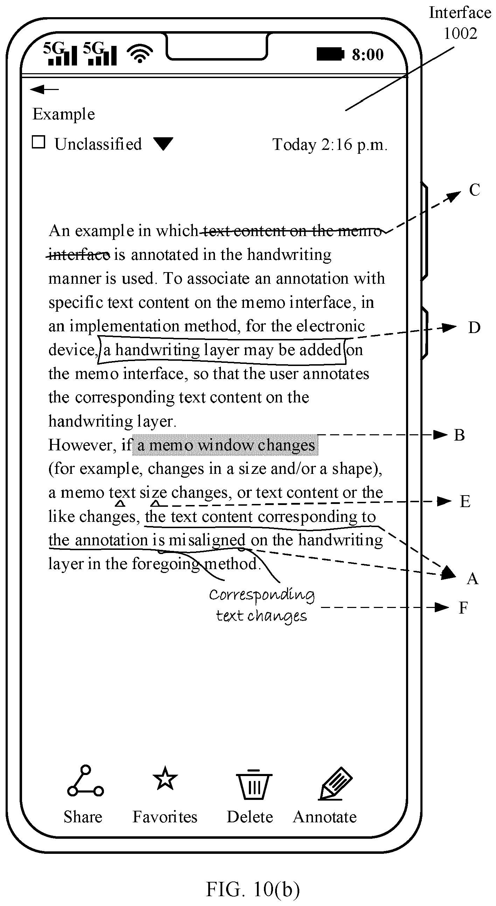

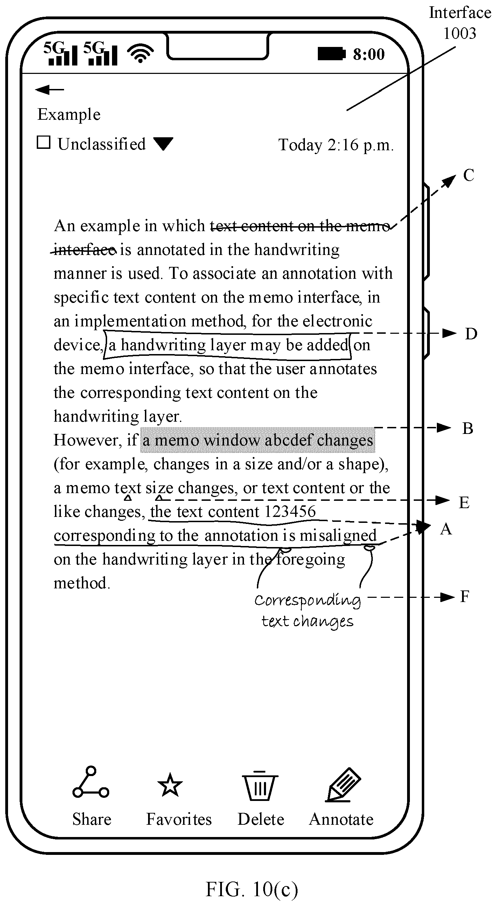

For example, with reference to FIG. 10(a), FIG. 10(b), and FIG. 10(c), FIG. 10(a), FIG. 10(b), and FIG. 10(c) show several example diagrams of rendering a handwritten annotation by an electronic device according to an embodiment of this application by using an example in which a user adds a handwritten annotation A, annotation B, annotation C, annotation D, annotation E, and annotation F to text content on a memo interface.

In an example, it is assumed that a change such as zooming out of an interface 1001 shown in FIG. 10(a) occurs on the memo window. In this case, when performing interface rendering, the smartphone adapts to a window size change based on the stored annotation style, and re-renders a handwritten annotation of the user at a position corresponding to text content. Specifically, as shown in FIG. 10(a), based on a changed window size, the smartphone re-renders an underline below the text "the text content corresponding to the annotation is misaligned", re-renders a highlight line on the text "a memo window changes", re-renders strikeout on the text "text content on the memo interface", re-renders rectangular selection around the text "a handwriting layer may be added", re-renders a triangle mark below the text "text size", and re-renders, in the blank area below the text "is misaligned", the text annotation "Corresponding text changes" that is connected to the text "is misaligned" by using a solid curve.

It should be noted that, in FIG. 10(a) of this application, an example in which the memo window is zoomed out is used. For a window change in another form, the method provided in this embodiment of this application is also applicable, and can also resolve the problem of misalignment between an annotation and corresponding content on the display interface caused by a window change. For example, the method provided in this embodiment of this application is also applicable to a case in which a window shape changes (for example, the window changes from a landscape state to a portrait state, the window changes from a portrait state to a landscape state, or the window is changed by using a user operation).

In another example, it is assumed that a change such as a text size change of an interface 1002 shown in FIG. 10(b) occurs on memo text. In this case, when performing interface rendering, the smartphone adapts to the text size change based on the stored annotation style, and re-renders a handwritten annotation of the user at a position corresponding to text content. Specifically, as shown in FIG. 10(b), based on a changed memo text size, the smartphone re-renders an underline below the text "the text content corresponding to the annotation is misaligned", re-renders a highlight line on the text "a memo window changes", re-renders strikeout on the text "text content on the memo interface", re-renders rectangular selection around the text "a handwriting layer may be added", re-renders a triangle mark below the text "text size", and re-renders, in the blank area below the text "is misaligned", the text annotation "Corresponding text changes" that is connected to the text "is misaligned" by using a solid curve.

In another example, it is assumed that a change such as addition of text content on an interface 1003 shown in FIG. 10(c) occurs on memo text. In this case, when performing interface rendering, the smartphone adapts to newly added text based on the stored annotation style, and re-renders a handwritten annotation of the user at a position corresponding to text content. Specifically, as shown in FIG. 10(c), based on memo text content obtained after the addition, the smartphone re-renders an underline below text "the text content 123456 corresponding to the annotation is misaligned", re-renders a highlight line on text "a memo window abcdef changes", re-renders strikeout on the text "text content on the memo interface", re-renders rectangular selection around the text "a handwriting layer may be added", re-renders a triangle mark below the text "text size", and re-renders, in the blank area below the text "is misaligned", the text annotation "Corresponding text changes" that is connected to the text "is misaligned" by using a solid curve.

In FIG. 10(c), an example in which the smartphone makes a handwritten annotation adapted to an annotation of adjacent text for newly added text is used. As shown in FIG. 10(c), the smartphone renders, below text "123456", an underline adapted to an annotation of the surrounding text "the text content corresponding to the annotation is misaligned", and renders, on text "abcdef", a highlight line adapted to an annotation of the surrounding text "a memo window changes". In some other examples, when a change such as addition of text content on the interface 1003 shown in FIG. 10(c) occurs on memo text, the smartphone may alternatively not render a handwritten annotation for the text " 123456" and/or the text "abcdef" when re-rendering the interface. This is not specifically limited in this application.

In some embodiments, when displaying the annotation corresponding to the one or more targets on the display interface, the electronic device may display an updated display interface based on the stored annotation style. The updated display interface includes the annotation corresponding to the one or more targets. That is, the electronic device may directly render, on the display interface, the annotation corresponding to the one or more targets. An example in which the display interface is a memo interface is used. The electronic device may directly render, on the memo interface based on an annotation style stored in text information corresponding to content on the memo interface, an annotation corresponding to one or more words.

In some other embodiments, when displaying the annotation corresponding to the one or more targets on the display interface, the electronic device may display the annotation on the annotation layer based on the stored annotation style. The annotation displayed on the annotation layer corresponds to the one or more targets on the display interface. That is, the electronic device may render, independently of the display interface and at a corresponding position on the annotation layer, the annotation corresponding to the one or more targets. An example in which the display interface is a memo interface is used. The electronic device may render, at a corresponding position on the annotation layer based on an annotation style that is separately stored and independent of text information corresponding to content on the memo interface, an annotation corresponding to one or more words.

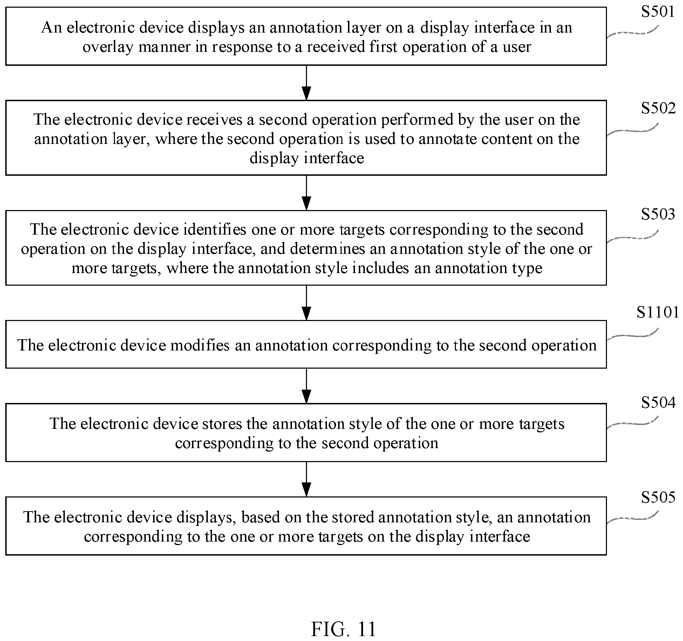

Further, in some embodiments, as shown in FIG. 11, before the electronic device performs step S504, the method for displaying a handwritten annotation provided in this embodiment of this application further includes step S1101.

S1101. The electronic device modifies the annotation corresponding to the second operation.

It may be understood that, in this embodiment of this application, if an annotation for text content is manually entered by the user by using a hand, a stylus, a virtual stylus, or the like, it is usually difficult for the annotation to obtain a standard line shape or graphic similar to a computer drawing. Therefore, in this embodiment of this application, an annotation such as a line shape or a graphic that is manually entered by the user is usually a line shape or a graphic close to a standard shape.

In some embodiments, the electronic device may identify a line shape, a graphic, a text annotation, and the like that are entered by the user by using the second operation; and modify the line shape entered by the user to a corresponding standard line shape, modify the graphic entered by the user to a corresponding standard graphic, and modify a handwritten annotation entered by the user to text in a standard font. For example, the electronic device may modify a line shape, such as an underline, strikeout, a highlight line, or a connection line, entered by the user to a standard straight line. For another example, the electronic device may modify a circle, a rectangle, a circle, an ellipse, or the like entered by the user to a corresponding standard circle, standard rectangle, standard circle, standard ellipse, or the like. For another example, the electronic device may modify a handwritten annotation entered by the user to text in regular script.

When the electronic device performs the foregoing step S1101, step S504 shown in FIG. 11 specifically includes: The electronic device stores a modified annotation style of the one or more targets corresponding to the second operation. Step S505 shown in FIG. 11 specifically includes: The electronic device displays, based on the modified annotation style that is stored, an annotation corresponding to the one or more targets on the display interface.

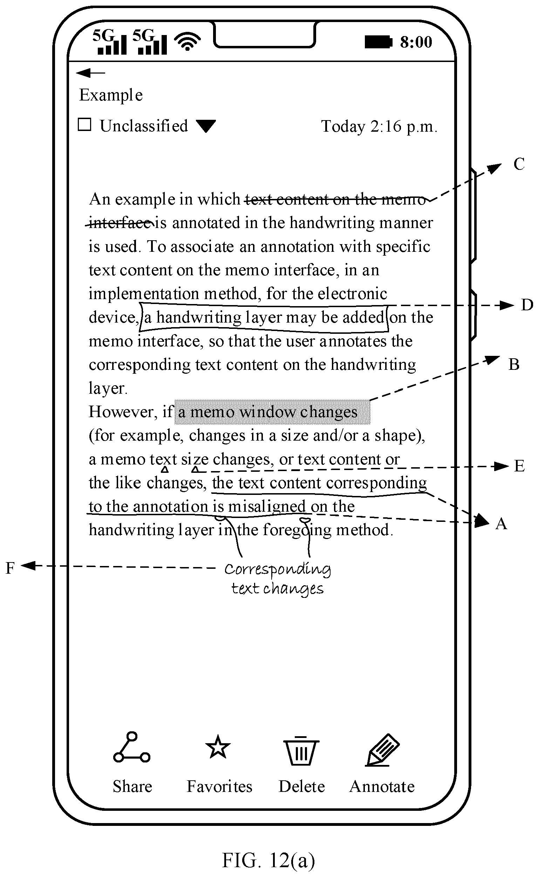

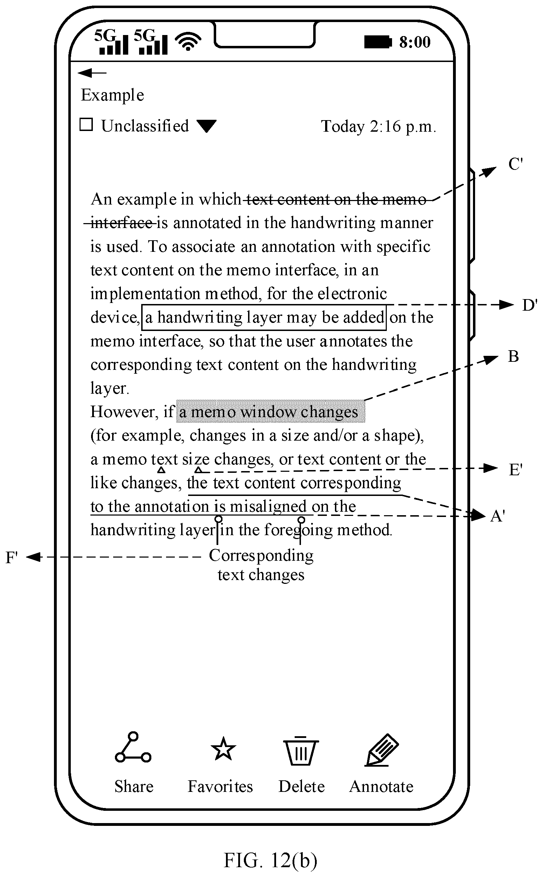

With reference to FIG. 12(a) and FIG. 12(b), FIG. 12(a) and FIG. 12(b) show comparison diagrams of an unmodified handwritten annotation and a modified handwritten annotation of an electronic device according to an embodiment of this application. FIG. 12(a) shows an example diagram of a handwritten annotation that is not modified by the electronic device. FIG. 12(b) shows an example diagram of a handwritten annotation that is modified by the electronic device. A handwritten annotation A shown in FIG. 12(a) is a handwritten underline written by the user, and is not modified by the smartphone; and a handwritten annotation A' shown in FIG. 12(b) is modified by the smartphone to a standard straight-line underline. A handwritten annotation C shown in FIG. 12(a) is handwritten strikeout written by the user, and is not modified by the smartphone; and a handwritten annotation C' shown in FIG. 12(b) is modified by the smartphone to standard straight-line strikeout. A handwritten annotation D shown in FIG. 12(a) is a handwritten selection box written by the user, and is not modified by the smartphone; and a handwritten annotation D' shown in FIG. 12(b) is modified by the smartphone to a standard rectangular selection box. A handwritten annotation E shown in FIG. 12(a) is a handwritten approximate triangle mark written by the user, and is not modified by the smartphone; and a handwritten annotation E' shown in FIG. 12(b) is modified by the smartphone to a standard triangle mark. A handwritten annotation F shown in FIG. 12(a) is a handwritten annotation written by the user, and is associated, by using a handwritten straight line written by the user, with text "is misaligned" marked with a similar circular icon; and a handwritten annotation F' shown in FIG. 12(b) is modified by the smartphone to text in regular script, and is associated, by using a modified standard straight line, with the text "is misaligned" marked with a standard circular mark.

Further, in this embodiment of this application, if the electronic device receives an editing operation (for example, a fourth operation) performed by the user on the annotation entered by using the second operation, the electronic device re-updates an annotation style of one or more targets corresponding to the fourth operation, and displays, based on an updated annotation style, an annotation corresponding to the one or more targets on the display interface. The fourth operation may include but is not limited to an operation of modifying, by the user, the annotation entered by using the second operation, an operation of striking out, by the user, the annotation entered by using the second operation, and the like.

It should be noted that, in the foregoing embodiment of this application, an example in which content on a display interface is text content is used to describe the annotation display method. Actually, the annotation display method provided in the embodiment of this application is applicable to any content on any application interface that supports input of an annotation by using an annotation layer. For example, the content on the display interface may alternatively be any other content such as a picture. In addition, in the foregoing embodiment of this application, a handwritten annotation is used as an example to describe the annotation display method. Actually, a specific form of the annotation is not limited in this application. For example, the text annotation may alternatively be an annotation entered by the user by using a virtual keyboard.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

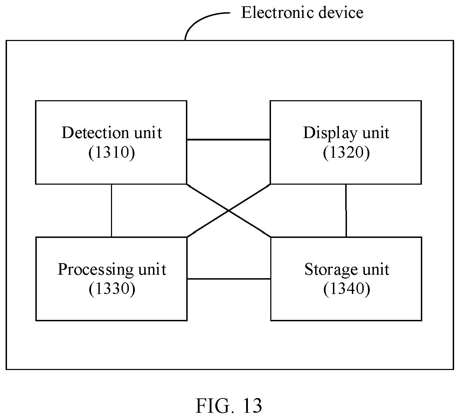

For example, when each functional module is obtained through division in an integrated manner, as shown in FIG. 13, FIG. 13 is a structural block diagram of an electronic device according to an embodiment of this application. The electronic device may include a detection unit 1310, a display unit 1320, a processing unit 1330, and a storage unit 1340.

The detection unit 1310 is configured to support the electronic device in detecting a first operation and a second operation of a user, and/or performing another related operation in this embodiment of this application. The first operation is used to trigger the display unit 1320 to display an annotation layer on a display interface in an overlay manner, and/or perform another related operation in this embodiment of this application. The second operation is an operation performed by the user on the annotation layer, and the second operation is used to annotate content on the display interface. The processing unit 1330 is configured to support the electronic device in identifying one or more targets corresponding to the second operation on the display interface, and determining an annotation style of the one or more targets; and/or performing another related operation in this embodiment of this application. The annotation style includes an annotation type (for example, a highlight line, an underline, strikeout, selection, a graphic mark, or a text annotation). The storage unit 1340 is configured to support the electronic device in storing the annotation style of the one or more targets corresponding to the second operation, and/or performing another related operation in this embodiment of this application. The display unit 1320 is configured to support the electronic device in displaying the annotation layer on the display interface in the overlay manner based on the first operation detected by the detection unit 1310, and displaying, based on the stored annotation style, an annotation corresponding to the one or more targets on the display interface; and/or performing another related operation in this embodiment of this application.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

Method or algorithm steps described in combination with embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM memory, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an electronic device. Certainly, the processor and the storage medium may alternatively exist in the electronic device as discrete components.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In an optional manner, this application provides a chip system. The chip system includes a processor and a memory. The memory stores instructions, and when the instructions are executed by the processor, the method according to any one of the possible implementations provided in this application is implemented. The chip system may include a chip, or may include a chip and another discrete component.

In the several embodiments provided in this application, it should be understood that the disclosed electronic device and method may be implemented in other manners. For example, the foregoing apparatus embodiments are merely examples. For example, division of the modules or units is merely logical function division. During actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An annotation display method, wherein the method comprises:
displaying, by an electronic device, an annotation layer on a display interface in an overlay manner when receiving a first operation of a user;
receiving, by the electronic device, a second operation performed by the user on the annotation layer, wherein the second operation is used to annotate content on the display interface;
identifying, by the electronic device, one or more targets corresponding to the second operation on the display interface, and determining an annotation style of the one or more targets, wherein the annotation style comprises an annotation type;
storing, by the electronic device, the annotation style of the one or more targets corresponding to the second operation; and
displaying, by the electronic device based on the stored annotation style, an annotation corresponding to the one or more targets on the display interface.

2. The method according to claim 1, wherein the method further comprises:
in response to a received third operation of the user, displaying, by the electronic device based on the stored annotation style, the annotation corresponding to the one or more targets on the display interface, wherein
the third operation of the user comprises one or more of the following: an operation of changing a window size of the display interface by the user, an operation of changing a window shape of the display interface by the user, an operation of changing content on the display interface by the user, and an operation of changing a size of content on the display interface by the user.

3. The method according to claim 1 or 2, wherein the displaying, by the electronic device based on the stored annotation style, the annotation corresponding to the one or more targets on the display interface comprises:
displaying, by the electronic device, an updated display interface based on the stored annotation style, wherein
the updated display interface comprises the annotation corresponding to the one or more targets.

4. The method according to claim 1 or 2, wherein the displaying, by the electronic device based on the stored annotation style, the annotation corresponding to the one or more targets on the display interface comprises:
displaying, by the electronic device, the annotation on the annotation layer based on the stored annotation style, wherein
the annotation displayed on the annotation layer corresponds to the one or more targets on the display interface.

5. The method according to any one of claims 1 to 4, wherein the one or more targets corresponding to the second operation on the display interface comprise one or more words and/or one or more pictures.

6. The method according to any one of claims 1 to 5, wherein the annotation type comprises any one of the following: a highlight line, an underline, strikeout, selection, a graphic mark, or a text annotation.

7. The method according to any one of claims 1 to 6, wherein the identifying, by the electronic device, one or more targets corresponding to the second operation on the display interface comprises:
obtaining, by the electronic device, first coordinate information, wherein the first coordinate information is coordinate information of an operation track corresponding to the second operation in a preset coordinate system;
obtaining, by the electronic device, second coordinate information, wherein the second coordinate information is coordinate information of all content on the display interface in the preset coordinate system; and
determining, by the electronic device, one or more targets corresponding to the second coordinate information that matches the first coordinate information.

8. The method according to any one of claims 1 to 7, wherein before the storing, by the electronic device, the annotation style of the one or more targets corresponding to the second operation, the method further comprises:
modifying, by the electronic device, the annotation corresponding to the second operation.

9. The method according to claim 8, wherein the modifying, by the electronic device, the annotation corresponding to the second operation comprises:
modifying, by the electronic device, a line shape entered by the user by using the second operation to a corresponding standard line shape; and/or
modifying, by the electronic device, a graphic entered by the user by using the second operation to a corresponding standard graphic; and/or
modifying, by the electronic device, a text annotation entered by the user by using the second operation to text in a standard font.

10. The method according to any one of claims 2 to 9, wherein
the annotation style further comprises a line shape of the highlight line, the underline, the strikeout, the selection, or the graphic mark, or a line shape of a connection line between the text annotation and the corresponding target.

11. The method according to any one of claims 2 to 10, wherein
the annotation style further comprises a relative position between the highlight line, the underline, the strikeout, the selection, the graphic mark, or the text annotation and the corresponding target.

12. The method according to any one of claims 1 to 11, wherein the method further comprises:
updating, by the electronic device, the annotation style in response to a received fourth operation of the user, wherein
the fourth operation is an editing operation performed by the user on the annotation entered by using the second operation.

13. The method according to any one of claims 1 to 12, wherein
the first operation comprises an operation of selecting a virtual stylus type by the user or an operation of selecting an annotation pattern by the user, wherein
the virtual stylus type comprises a virtual pencil, a virtual fountain pen, a virtual ball-point pen, or a virtual marker; and the annotation pattern comprises highlighting, underlining, striking out, selecting, graphically marking, or textually annotating.

14. The method according to any one of claims 1 to 13, wherein
the second operation comprises a sliding operation performed by the user above, below, around, or on the one or more targets.

15. An electronic device, wherein the electronic device comprises one or more sensors, a display, a memory, and a processor, wherein
the memory comprises program instruction code, and when the processor executes the program instruction code, the electronic device performs the method according to any one of claims 1 to 14.

16. A computer-readable storage medium, wherein the computer-readable storage medium stores computer-executable instructions, and when the computer-executable instructions are executed by a processing circuit, the method according to any one of claims 1 to 14 is implemented.

17. A computer program product, wherein the computer program product comprises program instructions, and when the program instructions are executed, the method according to any one of claims 1 to 14 is implemented.
